Europäisches Patentamt

European Patent Office

Office européen des brevets

(19)

(11) Publication number: **0 198 136**
**A2**

# EUROPEAN PATENT APPLICATION

(12)

(21) Application number: **85305436.9**

(22) Date of filing: **30.07.85**

(51) Int. Cl.⁴: **G 04 G 15/00,** H 04 N 5/76,
G 11 B 19/02, G 06 K 7/10

(30) Priority: **15.04.85 US 723147**

(43) Date of publication of application: **22.10.86**
**Bulletin 86/43**

(84) Designated Contracting States: **AT BE CH DE FR GB IT LI
LU NL SE**

(71) Applicant: **UNIVERSAL TELEVISION BARCODE, INC.,
3663 Lindell, St. Louis Missouri 63108 (US)**

(72) Inventor: **Hiieman, H. James, 18 Ponca Trail, Kirkwood
Missouri 63122 (US)**
Inventor: **Shockey, Richard D., 1122 Edward Terrace, St.
Louis Missouri 63117 (US)**
Inventor: **O'Donnell, Francis E. Jr. M. D., P.O. Box 303,
Marion Illinois 62969 (US)**

(74) Representative: **Abbie, Andrew Kenneth et al, A.A.
THORNTON & CO. Northumberland House 303/306 High
Holborn, London, WC1V 7LE (GB)**

(54) **Optical bar code programmer for VCR.**

(57) An automatic digital electronic programming circuit
provides for the entry of program data to a VCR through use
of a light pen to «swipe» across the program data in bar
code format. The circuit includes a memory for storing the
broadcast data, a real time clock for generating data corre-
sponding to real time and a comparator for comparing the
stored data with the real time to activate the VCR control for
recording.

EP 0 198 136 A2

-1-

OPTICAL BAR CODE PROGRAMMER FOR VCR

Background and Summary of the Invention

During the last several years, video casette recorders (VCR) have become more and more popular for use with televisions in the home as a means of recording programs for later playback. To facilitate this activity, many major manufacturers have incorporated programming features into their VCR's which permit a viewer to input information related to the program desired to be recorded in the future, with the result that the VCR will then record the television broadcast while unattended. Many variations of this programming capability have been incorporated by various manufacturers, but a common drawback among the VCR's presently available is that programming the VCR can be quite detailed and intricate to the average consumer. Of course, most people are accustomed to quickly and easily changing their television channel and using the other controls of their television with very little sophistication and knowledge. To reach the same consumer, the programmable feature of the VCR should ideally be as simple if not more so to operate than the ordinary television controls commonly known and understood. Several studies have been made to determine the acceptance of the programming capability by consumers and it has been found that as many as 70% of all VCR owners do not adequately understand the capabilities of their VCR and consequently do not make adequate use of them, including the programming feature. This is particularly troublesome when it is commonly agreed that only the more sophisticated viewers are presently purchasing and using VCR equipment. Consequently, a large and ready market exists for VCR's having programming capability with simple controls to enable the consumer who owns a television to operate the VCR in an equally simplified manner.

It is also understood that bar code technology is presently available and is in wide use in many industries for various kinds of activities and to contain many kinds of data. A common example of bar coded information which is in present everyday use is the supermarket which contains a large number of food items each of which has a bar code indicia printed on the container or label for the goods and which is scanned at the checkout stand to input the coded information into the sophisticated data terminal and produce a price and product listing. The concept of bar code technology permits upgrading and changing of various parameters, including price, in the memory of the data terminal or computer without going through the previous requirements of manually marking and remarking prices on products already on the shelves, or simply ignoring changes in prices as they effect existing inventory previously placed on the shelf.

There are many different kinds of bar code standards, and there is presently movement in the industry to minimize the conflict between these var-

0198136

- 3 -

ious standards, and possibly arrive at a single universal standard for bar coding information on various kinds of products and the like.

To satisfy the long-felt need in the VCR and television industry, the inventors herein have succeeded in developing an automatic programming device for a VCR which utilizes the bar code technology presently available to permit the automatic entry of bar coded program data into a VCR to automatically program the VCR to record the corresponding television broadcast. Of course, with the advent of cable, many consumers are receiving their television broadcasts via cable, and it should be understood that the inventors intend to include cablecast in their definition of broadcast. It is anticipated that various television programming guides will be produced with bar code information adjacent the various program listings to facilitate the utilization of the present invention. Until that is achieved, specialized program listings containing bar code information can be created at relatively minor expense and distributed to select groups of viewers. With this bar code information available in the viewing guide, a VCR owner need only input the bar coded information to the present invention by passing a light pen or the like across the bar code information (as commonly known) and the VCR is automatically instructed and programmed to record the television broadcast corresponding to the bar coded information adjacent the program listing in the viewing guide. Thus, the present invention virtually eliminates the many drawbacks of the programming controls presently available in VCR's.

The present invention utilizes digital electronic logic elements, and not a microprocessor,

- 4 -

without unduly sacrificing capability to achieve the programming function. A first input portion of the circuit reads the data of the bar code and converts it from serial to parallel format. A second portion of the circuit sequentially loads the parallel data into a memory and provides a feedback signal (such as a "beep") when the programming information has been fully loaded into the memory. Another portion of the circuit contains a real time clock and a comparator circuit with the necessary controls to sequentially compare each program with the real time as produced by the clock in a continuous manner until such time as the real time matches a program time, in which event the VCR control is activated and another timing circuit is reset and times down for the length of time programmed into the memory. At the same time, the tuner is automatically switched to the programmed channel, thereby operating the VCR control to automatically record the selected program. At the end of the recording, the VCR control is automatically turned off, and the program data is automatically erased from the memory to make room for additional recording requests.

Although the automatic programming input circuit of the present invention is particularly suited for use in the original manufactured VCR, it can be packaged and sold as an add-on unit with such modifications as would be obvious to one of ordinary skill in the art. Thusly, manufacturers of VCR units can incorporate this automatic programming feature in their newer models, and also offer the feature as a retrofit or optional feature to be added to those many thousands of VCR's already sold and in use. Furthermore, it is anticipated that the other various features presently offered in VCR controls will con-

- 5 -

tinue to be used to facilitate and enhance the programming feature. For example, most VCR's provide a
means for an operator to view the program data information contained in the program memory by means of a
visual display. Although not shown in connection
with the present invention, one of ordinary skill in
the art could very easily display the information
contained in the memory circuits of the present invention so that an operator could determine which
programs are set up to be recorded by the VCR. It is
anticipated that this approach will be used in many
cases to adapt the circuits of the present invention
to the particular VCR design.

The above provides a brief overview of some
of the advantages and features of the present invention. A more fuller and complete understanding of
this invention may be achieved by reviewing the drawings and description of the preferred embodiment
whichfollow.

Brief Description of the Drawings

Figure 1 is a representational view of various program listings containing bar coded programming information, and a VCR with a light pen having
the circuits of the present invention; and

Figures 2a and 2b are a schematic diagram
of the electronic programming circuit of the present
invention.

Detailed Description of the Preferred Embodiment

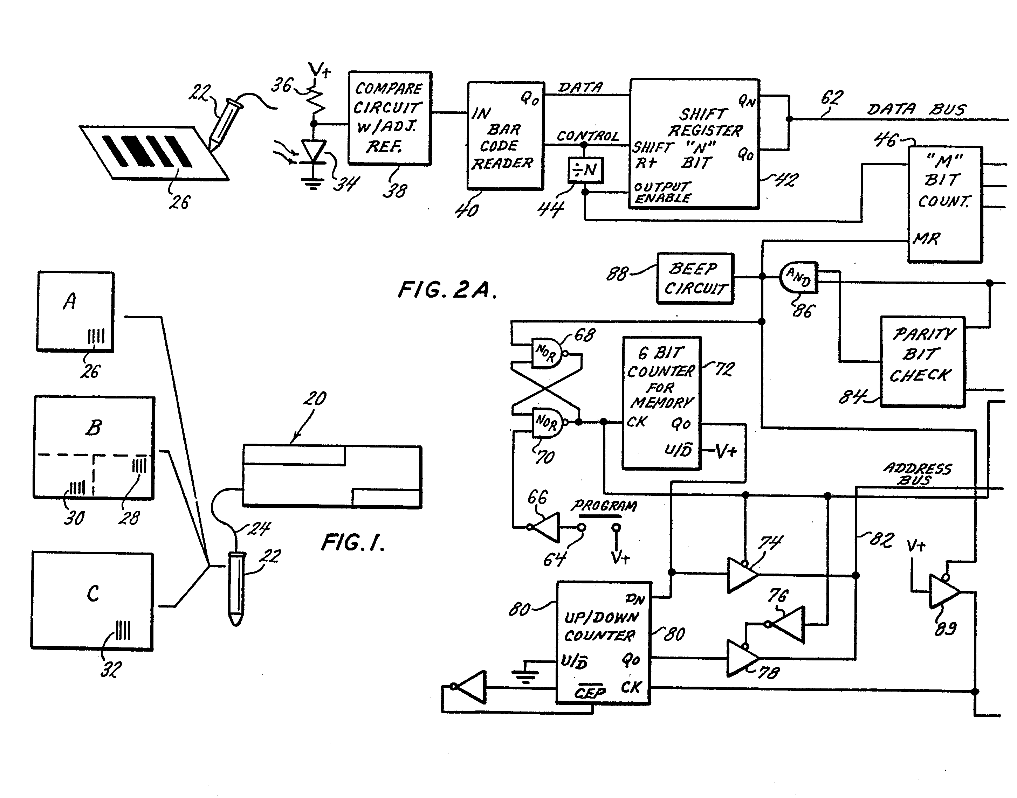

As shown in Figure 1, a VCR 20 which has
the circuit of the present invention included therein
would have a light pen 22 connected thereto with a
suitable electrical conductor 24 for reading bar
coded information 26 from a typical program guide A,
or bar coded information 28, 30 from a newspaper or
magazine B, or bar coded information 32 from a direct mail or promotional flier C to program the VCR 20 to record the television broadcast corresponding to the bar coded information as shown on either of A, B, or C.

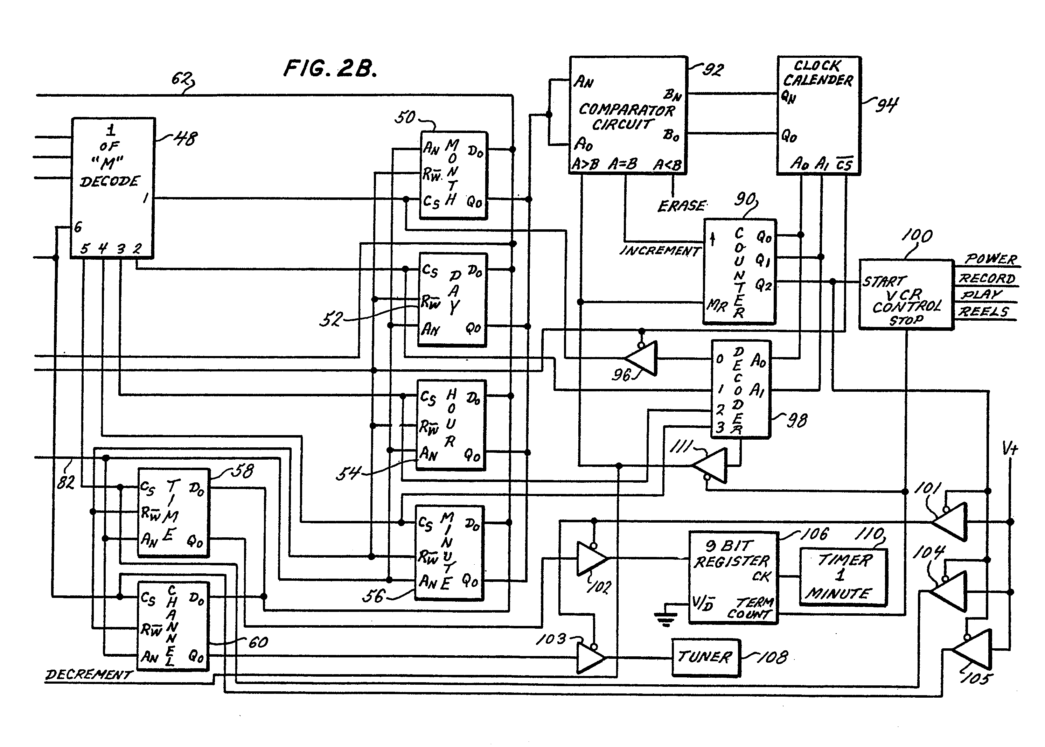

The circuit of the present invention is shown in block diagram form in Figures 2a and 2b and includes the light pen 22 which is used to "swipe" across a bar code, such as 26 as shown in Figure 1, which produces an electrical signal across the photosensitive diode 34 in series with a resistor 36, the signal from which is input to a comparator circuit 38 to shape the pulses generated by the diode 34, the output of which is input to a bar code reader 40, as known in the art. The output of bar code reader 40 is an asynchronous serial data stream, and a control pulse which is input to a shift register 42. The programming data is coded to have "N" bits such that a divide by "N" circuit 44 produces a pulse at the end of each byte of data to enable the shift register 42 output and also to pulse the "M" bit counter 46. The output of counter 46 is input to a one of "M" decoder 48 which produces an output along one of six output lines to select one of six memory chips 50-60, as shown. Thus, as the light pen 22 completes its swipe across one byte of data, the serial asynchronous data is read into the shift register 42, the divide by "N" circuit 44 produces a pulse to index "M" bit counter 46 which "M" decoder 48 translates to select one of the memory chips 50-60 for storing the data which appears in parallel form and is available along data bus 62.

As shown in the drawing, each bar code 26 contains six bytes of data. These include the month, day, hour, and minute at which the television broadcast begins that is desired to be programmed. The last two bytes of data include the length of time the program is broadcast, and the channel on which it is being broadcast. With these six bytes of data, the circuit will have complete information to record the desired program.

To start the programming procedure, a program button 64 is depressed which produces a +1 logic input to inverter 66 which sets the two cross-coupled NOR gates 68, 70, the output of which does several things. For programming purposes, it activates the read input at each of the memory chips 50-60 to ensure that the data is stored therein as the light pen 22 is swiped across the bar code 26. It also indexes counter 72, which contains the location of the highest memory programmed, to increase it by one in response to the entry of another set of program data. The cross-coupled NOR gates 68, 70 also activate gate 74 to permit the address data from counter 72 to program the memory chips 50-60 with the address wherein the data present at shift register 42 is to be stored. At the same time, an inverter 76 inverts the output of cross-coupled NOR gates 68, 70 to inhibit gate 78 and block address data from counter 80 to prevent it from confusing the address data already present on address bus 82 from counter 72. Counter 80 is a free-running counter which sequences through the addresses of program data contained in memory chips 50-60, and as a new program is loaded into the circuit, counter 72 creates a new address for that data to be stored in chips 50-60 and also adds the address to counter 80 so that it will be sequenced in turn, as is explained in greater detail below.

After the "M" decoder 48 has sequenced through the six bytes of data included in each bar code 26, the parity bit check 84 produces an output to AND gate 86 which has its other input connected to the last chip select line of "M" decoder 48 such that its output will go positive at the end of reading the bar code 26. As the output of AND gate 86 goes positive, a beep circuit 88 is activated to give an audible indication to the operator that the program data has been successfully input to the control. Also, AND gate 86 resets "M" bit counter 46 to ready it for the next input of program data, as well as resetting cross-coupled NOR gates 68, 70. AND gate 86 also activates buffer 89 to reset counter 90 so that comparator 92 will begin comparing month data from chip 50 with month data from real time clock calendar 94 at the end of a program cycle.

During the ongoing operation of the circuit, decoder 98 selects the data from memory chips 50-60, and also selects the proper real time from clock calendar 94 to be fed to comparator 92. This comparison is done sequentially, with month information being first compared. If the data stored in memory corresponding to the month is greater than the actual month, the A B output is activated which resets counter 90, and decrements counter 80 which sequences to the next address corresponding to the next recording programmed into memory chips 50-60. Thus, if all of the recordings requested to be programmed are for one month or more later than the actual month, the comparator circuit 92 will quickly index through each of these programs on a continuous basis without bothering to compare other data. Once the comparator circuit 92 compares the month being programmed with the actual month and finds that they are equal, counter 90 is incremented which indexes the address information at outputs $Q_0$-$Q_2$ to clock calendar 94 to call up the day information and select the day memory chip 52 through decoder 98 so that its output is presented to the other side of comparator circuit 92. Once again, if the programmed day is greater than the actual day, counter 90 is reset, counter 80 is decremented, and the next program is compared. This continues until the actual time is equal to the month, day, hour, and minute information stored in memory chips 50-56 and counter 90 thus puts a +1 output at its $Q_2$ output. This activates the VCR control 100 to start the recorder and begin recording while at the same time activating gate 101-105 to load the data from time memory chip 58 and channel memory chip 60 into a register 106 and a tuner 108. The register 106 has a one minute timer circuit 110 connected to its input which produces a pulse every minute to decrement the counter 106 until it reaches zero. As it reaches zero, it produces an output to stop the VCR control 100 and activate gate 111 to decrement counter 80. The circuit then resumes sequencing through stored program data until another match between real time and stored program request time occurs.

After a program has been recorded, and the comparator circuit 92 works its way through the comparison process to the same program, it will find that for some of the data stored in memory that it is less than the actual or real time data produced by clock calendar 94. When this occurs, an output is generated by comparator circuit 92 at its A B output to erase the programmed data from memory chips 50-60 and the corresponding memory location from counter 72. For purposes of clarity, the erase circuitry has not been shown as it would be obvious to one of ordinary skill in the art.

Thus, there has been described a digital electronic circuit which will accept bar coded pro-

- 10 -

gram information corresponding to television broadcast desired to be recorded, store that information, sequentially compare that information with real time, activate the VCR control to achieve the recording, erase the recorded programming information from memory, and provide a significantly greater number of program features than presently available.

There are various changes and modifications which may be made to applicant's invention as would be apparent to those skilled in the art. However, any of these changes or modifications are included in the teaching of applicant's disclosure and he intends that his invention be limited only by the scope of the claims appended hereto.

- 11 -

CLAIMS:

**1.**

In a video cassette recording means (VCR), said VCR having means to record television broadcasts on video cassettes, and a memory means for storing data corresponding to a plurality of television broadcasts desired to be recorded, the improvement comprising means to automatically enter said television broadcast data into said memory means for use by said VCR, said television broadcast data being embodied in bar code format.

**2.**

The device of Claim 1 further comprising means to convert said television broadcast data from serial format as it is embodied in bar code format to parallel format for entry into said memory means.

**3.**

The device of Claim 1 further comprising a light pen means to read said television broadcast data in bar code format.

**4.**

The device of Claim 1 wherein said television broadcast data comprises a plurality of bytes of data, and wherein said memory means comprises a memory associated with each byte of said broadcast data, said device further comprising means to sequentially enable said plurality of memories as said broadcast data is entered into said memory means so that each byte of broadcast data is stored in its associated memory.

5.

In a video cassette recording means (VCR), said VCR having means to record television broadcasts on video cassettes, and a memory means for storing data corresponding to a plurality of television broadcasts desired to be recorded, the improvement comprising means to automatically enter said television broadcast data into said memory means for use by said VCR, said television broadcast data being embodied in bar code format, clock means to generate clock data corresponding to real time, a comparator means connected to the clock means and the memory means to compare the data generated by each of said clock means and memory means, and means to sequence through said stored broadcast data for comparison with said clock data, said comparator means having means to generate a signal when data from said clock means equals data from said memory means to thereby activate the VCR for recording.

6.

The device of Claim 5 further comprising means to generate an address for storing said broadcast data as said broadcast data is input, said sequencing means having means to store said generated address data and sequence through each of said generated addresses and apply said address data to said memory means to generate broadcast data for comparison by the comparator means.

7.

The device of Claim 6 wherein said broadcast data comprises a plurality of bytes of data, and wherein said memory means comprises a memory associated with each byte of said broadcast data, said device further comprising means to sequentially enable said plurality of memories as said broadcast data is entered into said memory means so that each byte of broadcast data is stored in its associated memory.

8.

The device of Claim 7 further comprising means for an operator to interrupt said comparator means for entry of new broadcast data and thereby generate a new address and enable said memory means to receive said new broadcast data.

9.

The device of Claim 8 wherein the broadcast data comprises bytes for each of the month, day, hour, and minute, and further comprising means to sequentially present each of said bytes of data to said comparator means, said data sequencer having means to control said clock means so that corresponding real time data is simultaneously presented to said comparator means for comparison purposes, said comparator means having means to reset said data sequencer and index said address sequencer as said stored broadcast data is in the future from said real time data.

10.

In a video cassette recording means (VCR), said VCR having means to record television broadcasts on video cassettes, and a memory means for storing data corresponding to a plurality of television broadcasts desired to be recorded, the improvement comprising a light pen means to read bar coded data, said bar coded data comprising television broadcast data corresponding to a television program desired to be recorded, a bar code reader circuit and shift register to convert the bar coded information from serial format to parallel format for entry into said memory means, said television broadcast data comprising a plurality of bytes of data, each of said bytes corresponding to the month, day, hour, minute, elapsed time, and channel of the television broadcast desired to be recorded, said memory means comprising a memory associated with each byte of said broadcast data and means to sequentially enable said plurality of memories as said broadcast data is entered into said memory means so that each byte of broadcast data is stored in its associated memory, means for an operator to initiate entry of said television broadcast data, means to generate an address for storage of said new broadcast data in said memory means, means to automatically sequence through said addresses and apply said addresses to said memory means so that said broadcast data is sequentially output by said memory means, clock means to generate clock data corresponding to real time, a comparator means connected to the clock means and the memory means to compare the data generated by each of said clock means and memory means, said comparator having means to generate a signal when data from said clock means equals data from said memory means to thereby activate the VCR for recording, a timing means having means to read the memory associated with said elapsed time data and generate a signal after said elapsed time has elapsed in real time to stop the VCR recording function, and a tuning means to read the memory associated with the channel data as the VCR is activated for recording.

FIG.2A.

FIG.I.

FIG. 2B.